(19) Europäisches Patentamt / European Patent Office / Office européen des brevets

(11) **EP 2 246 785 B1**

(12) **EUROPEAN PATENT SPECIFICATION**

(45) Date of publication and mention
of the grant of the patent:
**08.01.2020 Bulletin 2020/02**

(51) Int Cl.:
***G06F 9/52*** *(2006.01)*

(21) Application number: **10159833.2**

(22) Date of filing: **14.04.2010**

(54) **System for managing and arbitrating for cost-constrained resources**

System zur Verwaltung einer Ressource mit begrenzten Kosten

Système de gestion d'une ressource à contrainte de coûts

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.04.2009 US 424856**

(43) Date of publication of application:
**03.11.2010 Bulletin 2010/44**

(73) Proprietor: **2236008 Ontario Inc.
Waterloo, ON N2K 0A7 (CA)**

(72) Inventors:
• **Jenkins, Tim
Kilburn Ontario K0A 2H0 (CA)**
• **Cardamore, Dan
Ottawa Ontario (CA)**

(74) Representative: **Hanna Moore + Curley
Garryard House
25/26 Earlsfort Terrace
Dublin 2, D02 PX51 (IE)**

(56) References cited:
**US-A1- 2009 265 486**

• **NATALIA DULGHERU: "Management of QoS in
Distributed MPEG Video Systems" 1 March 2004
(2004-03-01), XP002599248 Retrieved from the
Internet:
URL:http://citeseerx.ist.psu.edu/viewdoc/d
ownload?doi=10.1.1.126.3230&rep=rep1&type=
pdf [retrieved on 2010-08-18]**
• **NG J K-Y ET AL: "A distributed MPEG video player
system with feedback and QoS control"
REAL-TIME COMPUTING SYSTEMS AND
APPLICATIONS, 1998. PROCEEDINGS. FIFTH
INTERNATIONAL CONFERENCE ON
HIROSHIMA, JAPAN 27-29 OCT. 1998, LOS
ALAMITOS, CA, USA,IEEE COMPUT. SOC, US
LNKD- DOI:10.1109/RTCSA.1998.726356, 27
October 1998 (1998-10-27), pages 91-100,
XP010312403 ISBN: 978-0-8186-9209-3**

**EP 2 246 785 B1**

**Description**

**BACKGROUND OF THE INVENTION**

**1. Technical Field.**

This invention relates to the field of computer resource management, and in particular to a system that manages requests for access to a resource in a processing system.

**2. Related Art.**

Computers, embedded controllers, and other processing systems may include various resources that only respond to a finite number of concurrent requests by resource consumers of the system. Consuming a resource subjects the system to a cost or penalty. The cost penalty may make the resource unavailable to other consumers because it has limited throughput, consume more power, increase system noise or vibration, or incur a cost by using network services. Such cost-constrained resources may include optical storage drives, magnetic storage drives, video controllers, interface controllers, network interface controllers and similar resources. A resource may be cost-constrained in that it may be unable to adequately respond to all the concurrent requests that may occur in the system without degraded performance of the resource and/or system.

A processing system may have various cost-constrained resources such as network interfaces where there is a computational cost imposed on the system to use them. The cost-constrained resource may include an optical media drive, such as a DVD player. The DVD player may have an optical reading head used to read a limited number of data streams, such as a single data stream. The optical media drive may seek the location on the storage media holding requested data in response to a read request. The optical media drive may move the optical head and manipulate the rotating media to the correct location before it starts reading the requested data, all of which requires time. The manner in which these requests are managed may determine how much time is spent reading and how much time is spent searching, which has an impact on the operation and efficiency of the processing system.

Management of the resource requests may also have an impact on the user experience. If the optical media drive spends more time moving the optical head than i reading data, then software processes reading from the optical media drive may not receive the requested data in a timely manner. This may result in a system performance degradation that is perceivable by the user. Degradation may be noticeable when the user tries to view a continuous media presentation or rely on similar real-time interaction with the system. Such degradation may result in poor presentation quality (e.g., jittering, pauses, delays and similar erratic behavior).

"Management of QoS in distributed in MPEG video systems" by Dulgheru discloses an arrangement which maximises number of frames displayed per group of pictures for a plurality of clients. "A distributed MPEG video player system with feedback and QoS control" by Ng et al relates to a distributed MPEG player system using a feedback mechanism for QoS control.

**SUMMARY**

A system manages access to a cost-constrained resource. The system includes a plurality of resource consumers that may request access to the cost-constrained resource. Each of the plurality of resource consumers may calculate a respective need value corresponding to an amount of data stored in a buffer of the resource consumer relative to a total amount of data that may be stored in the buffer. A concurrency arbitrator may grant access to the cost-constrained resource to a given resource consumer of the plurality of resource consumers based on need values received by the concurrency arbitrator from the plurality of resource consumers. Also, or in the alternative, the concurrency arbitrator may grant access to the cost-constrained resource to a given resource consumer based on an amount of data stored in a buffer of the cost-constrained resource that is to be transferred to the given resource consumer.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

**BRIEF DESCRIPTION OF THE DRAWINGS**

The invention can be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a processing system for managing access to a cost-constrained resource.
Figure 2 is a system for managing access to a cost-constrained resource.
Figure 3 is a cost-constrained resource management system in a message-passing operating system.
Figure 4 shows data communications in a process for managing any cost-constrained resource.
Figure 5 is a process for managing cost-constrained resources.
Figure 6 is a further process for managing a cost-constrained resource using a resource controller to control operating parameters of the cost-constrained resource.

Figure 7 is a process for managing one or more cost-constrained resources of a media system.

Figure 8 is a process for managing a portable media player as a cost-constrained resource.

Figure 9 is a process for managing a plurality of similar cost-constrained resources.

## DETAILED DESCRIPTION OF THE PREFERRED EMBODIMENTS

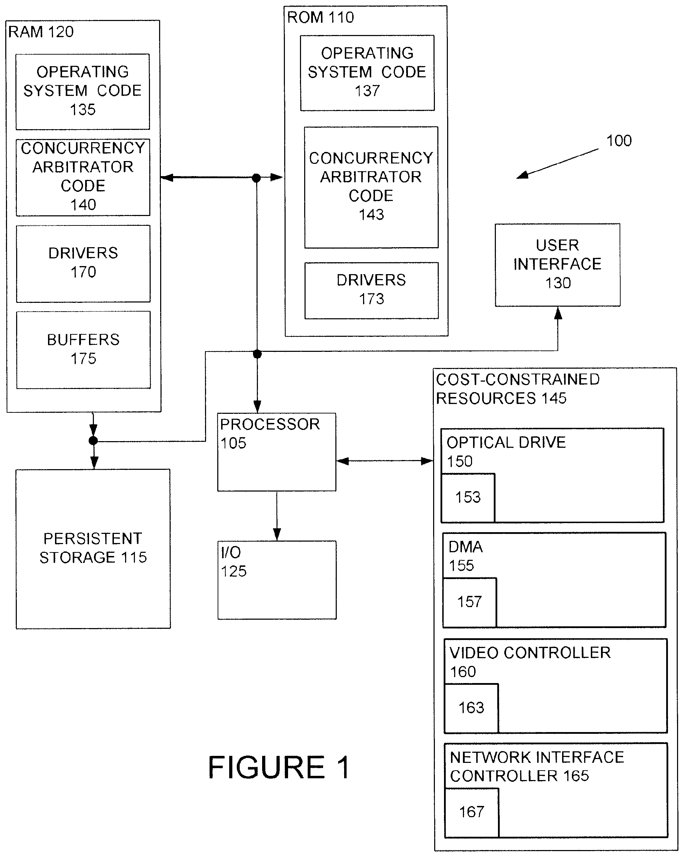

Figure 1 is a processing system 100 including a system for managing a cost-constrained resource. The processing system 100 may include one or more processors 105, a memory such as read only memory (ROM) 110, and a persistent storage unit 115. Processing system 100 also may include random access memory (RAM) 120, a user interface 130 and other resources/devices 145.

In Figure 1, the cost-constrained resources may include an optical drive 150, a direct memory access controller (DMA) 155, a video controller 160, and/or a network interface controller 165. Each cost-constrained resource may include one or more respective buffers, layers, and/or channels. Optical drive 150 is shown with a corresponding buffer 153. DMA 155 is shown with multiple channels and/or buffers 157. Video controller 160 is shown with corresponding video memory 163, which may include multiple video layers. Network interface controller 165 is shown with a corresponding buffer 167. Although each cost-constrained resource 145 is shown with a single buffer/layer/channel, multiple buffers/layers/channels may be employed by one or more of the cost-constrained resources 145.

Read only memory (ROM) 110 may include operating system code 135, concurrency arbitrator code 143, and drivers 173. Such code may be transferred to random access memory 120 in a boot operation at 135, 140, and 170, respectively, where the code may be executed by processor 105.

The operating system code 135 may control the interaction between high-level application programs executed by the processor 105 and hardware components, including memory devices 110 and 120, the persistent storage unit 115, the user interface 130, and the cost-constrained resources 145. The operating system code 135 may include concurrency arbitrator code 140 that is executable by processor 105 to organize and control access to the various cost-constrained resources 145. The cost-constrained resources may include optical storage drives, magnetic storage drives, video cards, direct memory access (DMA) channels, interface cards, hardware subsystems, and other resources. Alternatively, or in addition, the concurrency arbitrator 140 may be stored in and/or executed from a separate medium remote from the operating system code 135. In some systems, the concurrency arbitrator 140 may be stored in read only memory 110, persistent storage unit 115, or in some other storage medium. When the processing system 100 is linked with other computers and/or storage devices, the concurrency arbitrator 140 may be stored remotely and downloaded to the processing system 100 as needed. Figure 1 illustrates storage of the concurrency arbitrator code at 143 in read only memory 110 from which it is transferred to random access memory 120 for execution by the processor 105.

The persistent storage unit 115 may comprise a hard disk drive, floppy disk drive, etc. It may be a non-rotating media device, such as non-volatile memory implemented in an integrated circuit format (e.g., FLASH memory, etc.). The persistent storage unit 115 need not be limited to a single memory structure. Rather, the persistent storage unit 115 may include separate storage devices of the same type (e.g., all FLASH memory) and/or separate storage devices of different types (e.g., one or more FLASH memory units and one or more hard disk drives).

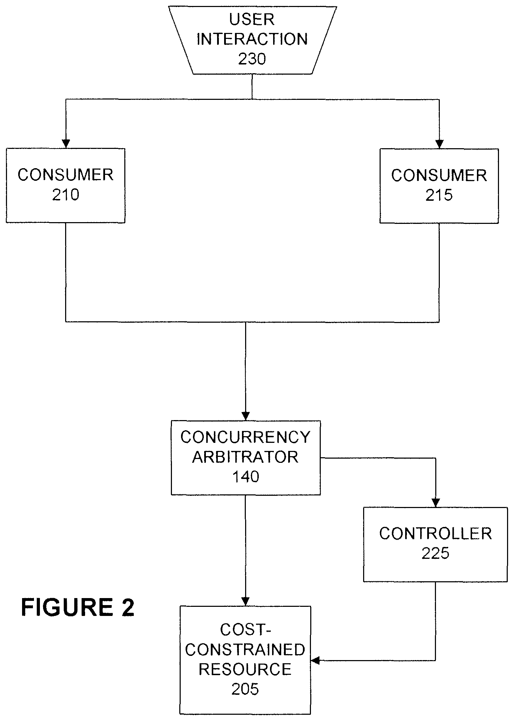

Figure 2 shows components of a cost-constrained resource management system 200. In Figure 2, a cost-constrained resource 205 is used. The cost-constrained resource 205 may correspond to one or more of the cost-constrained resources 145 shown in Figure 1. A resource may be cost-constrained in that it may be unable to adequately respond to all the concurrent requests that may occur in the system without degrading performance of the resource itself and/or the system. The cost-constrained resource 205 may be constrained in the number of resource consumers that may access it in a concurrent or substantially concurrent manner. Although the process shown in Figure 2 may be applied to any cost-constrained resource, the following description of the components is directed to its application in systems in that may include an optical drive 150, such as a DVD player having a single optical read head that may read a single stream of data at a time. Such a DVD player may be limited in its ability to service more than a single data resource consumer at a time.

Two resource consumers 210 and 215 are shown in Figure 2. The resource consumers 210 and 215 may concurrently request access to the cost-constrained resource 205. 210 and 215 may be software processes, software applications, threads, device, software agents, clients, avatars or other hardware or software related components. Although two consumers 210 and 215 are shown in Figure 2, there may be additional consumers requesting access to the cost-constrained resource 205 at the same time or nearly the same time.

The resource consumers 210 and 215 may include resource consumers that include data buffers and those that do not include data buffers. Resource consumers with data buffers may receive data from the cost-constrained resource 205 into their data buffers more quickly than they process data from their own data buffers. If this is not true (e.g., the resource consumer processes data from its own data buffer more quickly than the data buffer can be filled from the cost-constrained resource 205), then the resource consumer may need data from the cost-constrained resource 205 for a longer period of time and/or at a higher data transmission rate. In such instances, the system 200 may not be able to share the cost-constrained resource 205 with other resource consumers without an impact on system performance. The performance of the system 200 may degenerate if the resource consumer with the highest priority has exclusive control and consumes the cost-constrained resource 205 without releasing it.

As shown in Figure 2, requests for access to the cost-constrained resource 205 may be issued by the resource consumers 210 and 215. The access requests may be issued to the cost-constrained resource 205 through the concurrency arbitrator 140. Alternatively, or in addition, the requests for access may be calls to the operating system code 135. When the requests are calls to the operating system 135, the concurrency arbitrator 140 may be implemented as part of the operating system 135 or as an external software process that is the operating system 135. The requests for access to the cost-constrained resource 205 may be implemented as new calls added to an existing API and/or by extending existing calls. Some existing operating system calls may be defined and/or redefined to include data indicative of a 'need' of a consumer process for the cost-constrained resource. This data may be used with the system 200. The concurrency arbitrator 140 may receive the requests for access from the resource consumers 210 and 215, and determine how to allocate access to the cost-constrained resource 205.

The system 200 may also include a resource controller 225 that may manipulate the cost-constrained resource 205 to control the provision of its services to the resource consumers 210 and 215. For example, CD (compact disk) players and/or DVD players may be operated at various rotation rates. When operated at higher rotation rates, the players may consume more power, generate more audible noise, and may cause difficulty reading imperfect disks due to excessive vibration as compared to lower rotation rates. Provided that sufficient data can be provided to the resource consumers 210 and 215 to maintain the quality of the user experience, it may be desirable to operate the CD player and/or DVD player at a lower rotation rate. The concurrency arbitrator 140 may provide the resource controller 225 with an indicator of how quickly the cost-constrained resource 205 should provide its services.

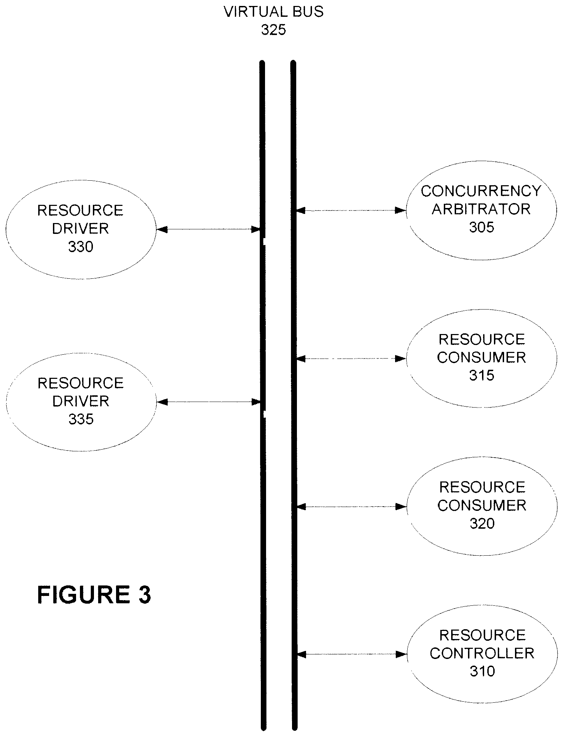

Concurrency arbitrator 140, resource controller 225 and cost-constrained resource 205 may be separate or integrated entities. Alternatively, the resource controller 225 and the cost-constrained resource 205 may be integrated (e.g., unitary devices). The concurrency arbitrator 140, resource controller 225 and cost-constrained resource 205 may be in the form of a file system hierarchically on top of an optical media drive. In a message-passing operating system, the concurrency arbitrator 140 and resource controller 225 may be implemented as separate processes that communicate in the manner shown in Figure 3 (305 and 310 respectively). In such a system, resource consumer 315 and resource consumer 320 are implemented as executable code that provides access requests to a virtual bus 325, which may be generated by executable code and include memory accessible to the resource consumers, cost-constrained resource 205 and resource controller 225. The access requests are handled by concurrency arbitrator 305 and resource controller 310, which manage access to resource driver 330 and resource driver 335, respectively.

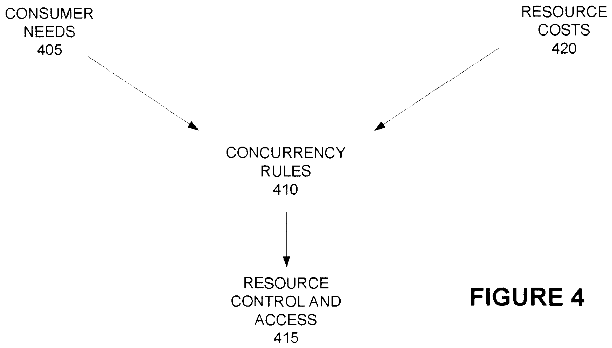

Figure 4 illustrates information that is communicated by the components shown in system 200. In Figure 4, each consumer 210 and 215 may provide data at 405 and 410, respectively, to the concurrency arbitrator 140. Data 405 and 410 may be indicative of the need that each resource consumer 210 and 215 has for access to the cost-constrained resource 205. The concurrency arbitrator 140 may use the data to determine which resource consumer 210 and/or 215 is to have access to the cost-constrained resource 205 by executing code that applies logical rules 410 to the data. Additionally, the concurrency arbitrator 140 may allocate the cost-constrained resource 205 based on data indicative of the cost 420 of allowing one or more of the resource consumers 210 and 215 access to the cost-constrained resource 205. The cost data 420 may be indicative of various operational characteristics of each of the resource consumers 210 and/or 215. For example, the cost data 420 may include data corresponding to power consumption by the cost-constrained resource 205 under various operating conditions required to meet the need of a given resource consumer. The cost data 420 may also include data corresponding to the data access time of the cost-constrained resource 205 and its relationship to the needs of a given resource consumer. Still further, the cost data 420 may include data corresponding to mechanical limitations of the cost-constrained resource 205 (e.g., an optical drive may vibrate and/or generate noise at different levels depending on the rotation rate of the drive, where the rotation rate may vary depending on which resource consumer is given access to the cost-constrained resource 205).

The concurrency arbitrator 140 may also determine the operating parameters that are used by the cost-constrained resource 205 to provide its services to resource consumers 210 and 215 (e.g., controlling the rotation rate at which an optical drive should operate). The concurrency arbitrator 140 may pass such control data to the resource controller 225, which adjusts the operation of the cost-constrained resource 205 using the control data.

Various operations may be executed by the concurrency arbitrator 140. These operations may include:

(1) determining each resource consumer's need for access to the cost-constrained resource;
(2) determining which resource consumer will have access to the cost-constrained resource; and
(3) determining the manner in which the cost-constrained resource operates (e.g., controlling its operating parameters).

Need and cost data may be associated with the system in a number of manners. In an automobile telematics space, a small number of cost-constrained resources, such as those shown at 145 of Figure 1, may be used. Once the cost-constrained resources are installed in the system 200, the system may remain static without further additions or removals of the consumer resources and/or cost-constrained resources. Hard-coding of need and cost data may be used in such static systems. Need and cost data may also be loaded onto the system 200 using default values, where the default values may be adjusted using data input menus, and/or automatically loaded when installing the cost-constrained and/or resource consumer devices and/or device codes. When a new cost-constrained resource 205 and/or resource consumer is installed on the system 200, the concurrency arbitrator 140 may become aware of the item and its associated need and/or cost.

Access to the cost-constrained resource 205 may be allocated on the basis of need and cost. In this configuration, resource consumer need may be categorized into a finite number of groups, such as "high", "medium" and "low" priority levels. Greater granularity may allow for more precise distinction between priority levels. Assignment of a need level to a resource consumer may be based on the quantity of data in its data buffer as compared to the total size of the data buffer. A measure of need may initially be provided by a consumer of a cost-constrained resource 205 to the concurrency arbitrator 140. This need may correspond to an initial interpretation by the consumer of the importance of its needs. The consumer may also establish its needs by measuring the amount of data in its receive buffers and/or how much data it has accumulated in its transmission buffers. A consumer that has a small amount of data in its buffers compared to its ability to process that data may express a high need to the concurrency arbitrator 140 for the cost-constrained resource 205. A consumer that has a large amount of data in its buffers compared to its ability to process that data buffer level may have a relatively low need. This manner of establishing objective need levels may be used when the consumers use audio and/or video media data.

Since access to the cost-constrained resource 205 may be allocated on the basis of resource consumer need, a consistent manner of determining that need may be used. To support consumers with different total numbers of buffers and/or buffer storage capacity, the need may be expressed as a normalized value ranging from zero (no need) to one (maximum possible need). The resource consumer and/or concurrency arbitrator 140 may adjust the need value of a resource consumer based on measurements that compare the quantity of data stored in the buffers of the resource consumer with the total storage capacity and/or number of buffers of the resource consumer. The normalized value corresponding to a need of the resource consumer for the cost-constrained resource at a given time may be expressed as:

$$N_i = (T_i - F_i) / T_i$$

where

$N_i$ is the normalized value corresponding to the need of resource consumer i for the cost-constrained resource,
$F_i$ is the number of resource consumer i's buffers that are full and/or the amount of data currently stored in resource consumer i's buffers, and
$T_i$ is the total number of buffers used in the resource consumer i and/or total amount of data that may be stored in consumer i's buffers.

This expression may provide a value between zero and one and may indicate the degree to which the buffers of the resource consumer are filled. It may also provide a process for a resource consumer to express its own objective measurement of its need for access without analyzing data relating to the consumers of the rest of the system. This need determination may be used when resource consumers have buffers of different sizes or the rate at which buffers are filled differ from one another. In these cases, it may impact how quickly the need changes when a particular resource consumer has access to the cost-constrained resource 205.

Other factors may also be used by the concurrency arbitrator 140 when allocating the cost-constrained resource to a resource consumer. The concurrency arbitrator 220 may use a hysteresis or damping function to reduce the frequency with which the concurrency arbitrator 140 attends to the needs of a given resource consumer. The need determination may be based on the buffer use characteristics of the resource consumer. If the resource consumer drains its buffers at a varying rate, the resource consumer may dynamically change its need according to that rate. The need determination may be different for different resource consumers. Care may be taken to avoid increasing the need of a resource consumer while it is accessing the cost-constrained resource 205.

To allow the concurrency arbitrator 140 to compare the needs of potentially disparate consumer types that are independent of each other (e.g., other than the un-buffered resource consumers described above), the needs reported to the concurrency arbitrator 140 by the resource consumers may be weighted or hard-coded for use by the concurrency arbitrator 140. The weightings may be used by the concurrency arbitrator 140 to balance the relative needs of the resource consumers and/or to prioritize access by the resource consumers to the cost-constrained resource 205. While the need values may be expressed based on calculations executed by the resource consumers, the calculations using the weighting may be executed by the concurrency arbitrator 140 to convert the need values to values corresponding to the needs of the various resource consumers from a system perspective (e.g., how important it is to satisfy one consumer's needs, relative to the needs of other consumers).

The $Ni = (Ti - Fi) / Ti$ determination may also be used by resource consumers operating as background resource consumers, where the background resource consumers do not have any buffers (e.g., un-buffered process consumers). The need of an un-buffered resource consumer may be determined using virtual buffers. In determining the need value, the virtual buffers of the un-buffered resource consumer may be assumed to be either empty or full. When the un-buffered process consumer is running, it may set its own normalized need to value of one. Under such circumstances, the virtual buffers of the resource consumer are assumed to be empty. In order to prevent excessive use of the cost-constrained resource by the un-buffered resource consumer, the need of the unbuffered resource consumer may have a weighted value. When the un-buffered resource consumer is not running, it may set its virtual buffers to a full state, driving its normalized need value to zero.

If there is more than one un-buffered resource consumer requesting the cost-constrained resource 205 at the same time, the un-buffered resource consumer with the lowest weighting may not obtain access to the cost-constrained resource 205. Accordingly, resource consumers may be designed with at least one buffer or its functional equivalent. In order to generate a resource consumer with a time varying need based on the $Ni = (Ti - Fi) / Ti$ determination, the un-buffered resource consumer may effectively indicate that all of its buffers are full when it does not need access to the cost-constrained resource. The un-buffered resource consumer may indicate that all of its buffers are empty when it does need access to the cost-constrained resource. A time varying representation of the buffer status may allow resource consumers having a lower standardized need value to also access the cost-constrained resource 205. A round-robin operation may be emulated by periodically cycling each of the un-buffered resource consumer's buffers between empty and full.

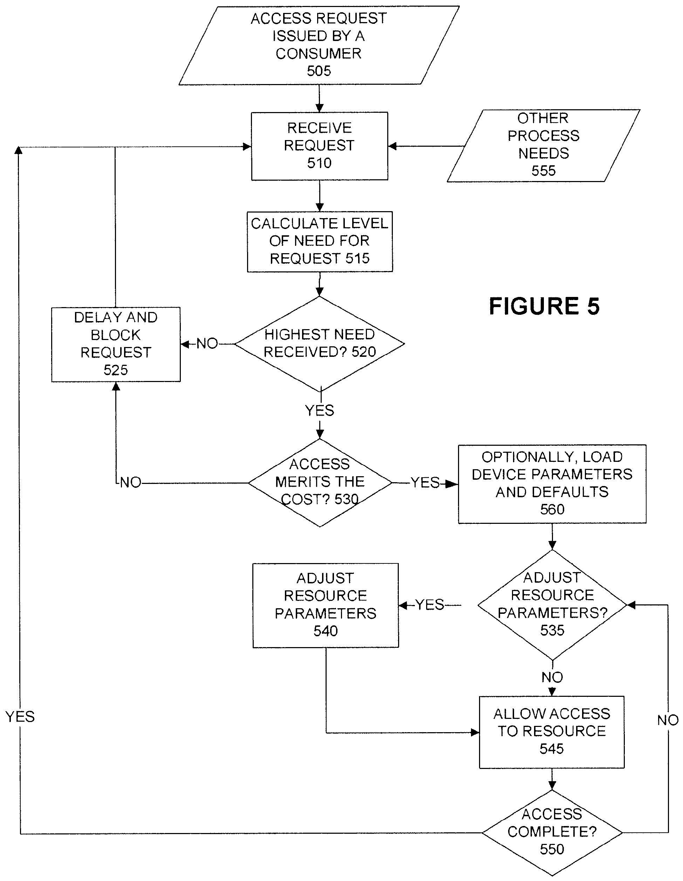

Figure 5 is a further process for managing resource consumer access to a cost-constrained resource. In Figure 5, the need values may be issued by the resource consumers 210 and 215 at step 505 and may range in value from 0 through to 1. The requests and need values may be received by the concurrency arbitrator 140 at step 510. Other process needs may also be received at step 555 from other resource consumers. The needs of each resource consumer 210 and 215 may be weighted at step 515. Once the needs are weighted, the resource consumer 210 and 215 with the highest need level as calculated by each resource consumer 210 and 215 may be identified at step 520. If a given resource consumer's need level is not the highest, then that access request may be blocked at step 525, and processing may return to step 510. If the given resource consumer's need is the highest priority, then the concurrency arbitrator 140 may grant access to the cost-constrained resource 205. In determining whether the given resource consumer is provided with access to the cost-constrained resource 205, the concurrency arbitrator 140 may determine whether the computational and/or data transfer costs associated with permitting the given resource consumer access to the cost-constrained resource 205 exceed a threshold level. The cost to switch access from one resource consumer to another may be based on the characteristics of the cost-constrained resource 205. With respect to an optical disc reader, the concurrency arbitrator 140 may execute calculations to determine a cost value indicative of the time it takes (e.g., on average) the optical disc reader to seek a new location on the optical media, the amount data that the resource consumer requires, or other processing characteristics. This may correspond to a throughput data value. If this throughput data value is low compared with the need level calculated by the resource consumer, access to the cost-constrained resource by the resource consumer may be inhibited by the concurrency arbitrator 140 until the need level data transmitted by resource consumer to the concurrency arbitrator 140 increases to a threshold need level and/or another resource consumer expresses a higher need level.

The cost level of allowing a resource consumer access to the constrained access resource 205 may be calculated by the concurrency arbitrator 140 at step 530. If the cost is excessive when comparing the calculated cost value with a cost threshold value, then the access request may be blocked at step 525, and processing may be returned to step 510. If the cost level calculated at step 530 does not exceed the threshold need level, then processing may continue at 560. At 560, operating parameters and/or default values related to the operation of the cost-constrained resource 205 may be optionally collected. The parameters/values may include the range of operating rotation rates that a CD drive may use. This information may be used at 335 to calculate whether the operating parameters of the cost-constrained resource 205 are to be changed to accommodate the needs of the resource consumers. If changes are to be made, then the controller 225 may be instructed accordingly by data transmissions from the concurrency arbitrator to the resource controller 225 at step 540. Access to the cost-constrained resource 205 may be granted at step 545. When the access session is complete, control may return to 510.

If the need levels calculated by a resource consumer escalate over time, the resource consumer may avoid an endless loop condition resulting from the operation shown at 530. Each time a resource consumer is rejected at 530, the need level of need may be calculated again at the next iteration of the loop at 515 and transmitted to the concurrency arbitrator 140. The calculated need level may escalate if it fails to gain access to the cost-constrained resource 205 until the calculated need level exceeds the threshold need level and/or other resource consumers express lower need levels. Once at least one or both of these conditions are present, the process consumer may obtain access to the cost-constrained resource number 205.

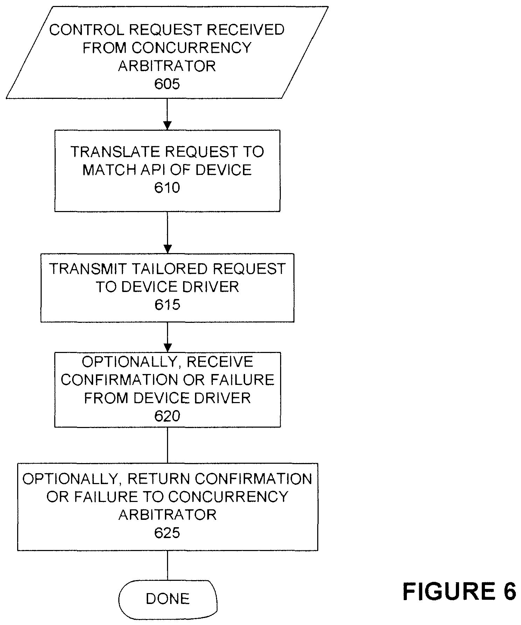

Figure 6 is a process for controlling a resource controller 225 and operating parameters of the cost-constrained resource 205 shown in Figure 2. The resource controller 225 may adjust the operating parameters of the cost-constrained resource 205 in response to instructions received from the concurrency arbitrator 140 at step 605. In the case of a CD player or similar device, the instructions may increase or decrease the rate of rotation of the drive. The resource controller 225 may translate the instructions received from the concurrency arbitrator 140 into instructions that are communicated to the API by the software driver for the cost-constrained resource 205 at 610. The API driver instruction data may be transmitted to the software driver for the cost-constrained resource 205 at 615. In response, the software driver may make the requested adjustments to the hardware and/or software operation of the cost-constrained resource 205.

In some cases, the cost-constrained resource 205 and/or its software driver may transmit data to the resource controller 225 confirming that the requested change has been completed. In such instances, the resource controller 225 may communicate the confirmation or failure notification to the system at 620. The system may then communicate the confirmation or failure information to the concurrency arbitrator 140 at 625.

The concurrency arbitrator 140 may execute a hysteresis and/or damping function when determining the needs of the resource consumers. The hysteresis and/or damping function may be used by the concurrency arbitrator 140 to reduce the number of changes that occur in response to resource consumer requests for the cost-constrained resource. The need for and/or use of a hysteresis and/or damping function may be based on the characteristics of the cost-constrained resource when switching between consumers. In the case of an optical disc reader, this may include the time and computational expense used to seek a part of the optical media that is different than the one currently being read.

The need values reported by resource consumers 210 and 215 may be quantized. The concurrency arbitrator 220 may use such quantization to provide hysteresis effects. Hysteresis effects may be suitable when the granularity of the need is large. A resource consumer may also influence the hysteresis and/or damping function by providing a first reporting behavior while the buffers of the resource consumer are filling their buffers and a second reporting behavior while the buffers of the resource consumer are emptied. For example, a resource consumer that reports need values of 0, 0.25, 0.75 and 1 may report data indicative of the maximum of the ranges when filling its buffers and the minimum of the ranges when emptying the buffers. The need of the resource consumer may be maintained until a transition to a smaller need level value occurs. The transition may correspond to the next value in the sequence of granularities.

A number of mechanisms may be used to determine the resource throughput value. The operating/computational costs associated with using the cost-constrained resource 205 and the minimum needs of the resource consumers 210 and 215 requiring access to the cost-constrained resource 205 may be considered in this determination. The cost-constrained resource 205 may provide sufficient throughput to service all resource consumers 210 and 215 at a minimum cost. For example, if running a CD drive at 40X normal rotation rate means twice the power consumption and twice the noise of running it at 20X rotation rate, and it can be determined that 20X is sufficient, then the CD drive should be controlled to run at a 20X rotation rate.

ITo determine the total required throughput, the concurrency arbitrator 140 may use the need values provided by the resource consumers 210 and 215. The concurrency arbitrator 140 may determine the effective sustained data stream rate needed by each resource consumer 210 and 215 for the cost-constrained resource 205. The instantaneous need for the cost-constrained resource 205 may be determined from the sum of the products of each resource consumer's need and its corresponding data stream rate. The need in this case may be an un-weighted need. In a steady state condition, the throughput may be based on an average of these values over a period of time.

A smoothing filter may be applied by the concurrency arbitrator 220 to respond to changes in data throughput needed from the cost-constrained resource 205. The smoothing filter may compensate for sudden increases in demand by the resource consumers for data from cost-constrained resource. The smoothing filter may respond quickly to increases in throughput and respond slowly to decreases in throughput.

Application of this system to a Posix File System API may employ an extension of the Posix API or the use of non-Posix calls. Some systems that provide Posix file system API calls may also support devctl() or ioctl() calls (device control and input/output control respectively) to perform non-standard operations on files. These mechanisms may allow a file system to provide the roles of concurrency arbitrator 140 and resource controller 225 under a Posix file system API. In these cases, the devctl() or ioctl() calls may set the bandwidth requirements of the resource consumer and to adjust the need of the next read() call. Non-blocking reads may be used as the need changes dynamically. The non-blocking reads may be communicated to the concurrency allocator 140.

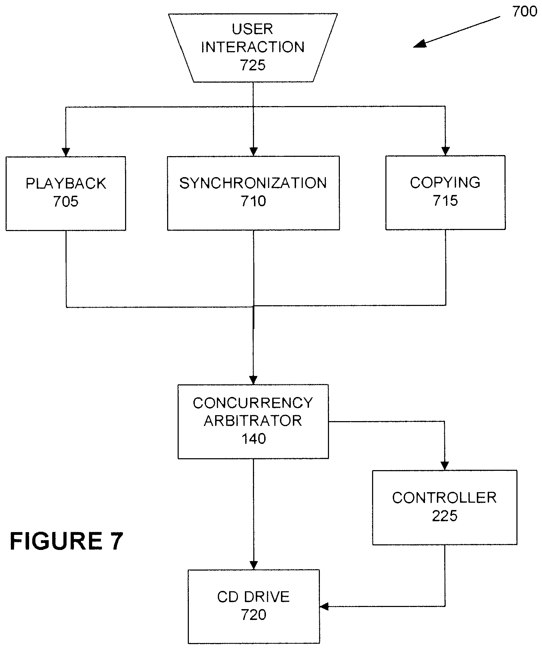

Figure 7 is a process for managing a media system as a cost-constrained resource. The cost-constrained resource of the media system 700 may be, for example, a CD drive, DVD drive, or similar media resource. In Figure 7, a user attempts to play media files, synchronize media files (get metadata), and copy files from an optical media, such as a data CD, where the operations take place in a generally concurrent manner. Multimedia system 700 may have resource consumers that include a playback process 705, a synchronization process 710, and a copying process 715 that are responsive to user interaction 725. The concurrency arbitrator 140, resource controller 225, and cost-constrained resource 205 (CD drive 720) may be implemented as a file system that is hierarchically on top of a data CD.

When the CD is inserted into the multimedia system 700 by a user, the synchronization process 710 may begin by requesting blocks of data from each file on the CD media in the CD drive 720 for metadata extraction. The synchronization process 710 may report a need level of "1" when requesting the first block of data from a file and a need level of "0" when it is processing the block.

The media content of the CD may be presented to a user on user interface 130. When the media content is presented to the user, the user may select a file for playback. At this point, the buffers of the playback process 705 may be empty, and it may present a need level of "1" to the concurrency arbitrator 140 thereby requesting a large amount of data for filling its playback buffers. As the buffers are filled, the need level may drop, eventually reaching 0 once its buffers are filled.

The user may also initiate a copy request, where the multimedia files of the CD media in the CD drive 720 are copied to another storage medium, such as a hard drive, USB storage, or other local or remote storage type (e.g. persistent storage 115). The copying process 715 may request access to the CD media of the CD drive 720, and its need may start at level "1" as it attempts to initiate the copying operation. This need may drop as the copying process 715 fills its buffers from the CD drive 720.

Weights may be assigned to each process 705, 710, and 715. The weights may be assigned by a system designer and/or user based on the desired operational priorities. For example, the playback process 705 may have the highest priority weighting and the copying processes 715 may have the lowest priority weighting. When there are multiple requests for the same CD drive 720, the processes will be given access to the CD drive 720 in a priority order that may be based, at least in part, on the assigned weighting.

Since the playback process 705 has the highest weighting value , it will be granted access to the CD drive 720 when its calculated weighted need level value exceeds a need value threshold and/or another resource consumer expresses a higher need level. As it fills its buffers, its weighted priority need begins to drop. Eventually, its need may drop below the weighted priority need of the synchronization process 710. At that point, the synchronization process 710 may be granted access to the CD drive 720. When this happens, the calculated weighted need level of the playback process 705 may begin to increase, and the weighted priority need of the synchronization process 710 may begin to decrease. If hysteresis is used, switching of the access between the playback process 705 and of the synchronization process 710 may occur at determined weighted priority need values depending, for example, on whether the weighted priority need of a process is increasing or decreasing.

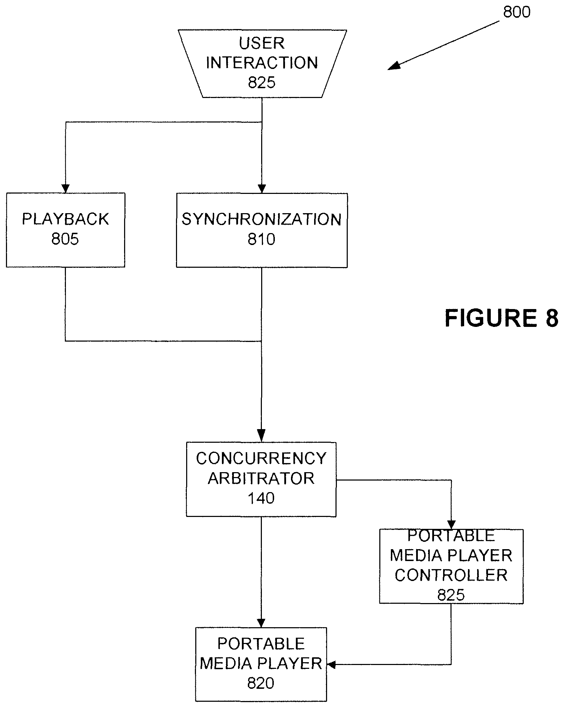

Some media devices, such as an Apple iPod®, may have specific restrictions and software elements associated with them. A process for managing such a device is shown in Figure 8. In Figure 8, the system 800 may include a playback process 805 and a synchronization process 810. The system 800 may also have a copying process. However, such copying functionality is not currently supported by the iPod® system but may be included in system 800 for other portable media players. Likewise, concurrent multiple playbacks from an iPod® are not currently supported. Both the playback process 805 and a synchronization process 810 are responsive to user interaction 625.

The concurrency arbitrator 140 may operate in the manner described above. However, the resource controller 825 of system 800 may be specific to a given type of portable media device 820 (e.g., an iPod®). For example, the resource controller 825 may permit multiple accesses to the portable media device 820 (e.g., an iPod®), depending on the type of portable media device. A synchronization process will be granted access at the same time as a playback process, but a second playback process may be blocked under such circumstances.

When a portable media device 820 (e.g., an iPod®) docks with the multimedia system 800, a synchronization process 810 may launch, requesting synchronization data from the portable media device 820. The synchronization process 810 may report a need level of "1" until a substantial portion of the data for synchronization been received.

The media content of the portable media device 820 may be presented to the user on user interface 130. When the media content is presented to the user, the user may select a file for playback. At this point, the buffers of the playback process 805 may be empty, and the playback process 805 may transmit a need level of "1" to the concurrency arbitrator 140 thereby requesting an amount of data for filling its playback buffers. As the buffers are filled, the need level transmitted by the playback process 805 may drop, eventually reaching 0 once its buffers are filled.

Weights may be assigned to the 805 and 810 processes. The weights may be assigned by a system designer and/or by a user based on the desired operational characteristics. For example, playback process 805 may have a higher weighting than the synchronization process 810 once the portable media player 820 has been docked and initial synchronization is substantially complete.

Since the playback process 805 has the highest weighting value in this instance, it may be granted access to the portable media device 820 when its weighted need levels exceed a threshold need level threshold and/or another resource consumer expresses a higher need level. As the playback process 805 fills its buffers with data retrieved from the portable media device 820, its weighted need level may begin to drop. Eventually, the weighted need level may drop below the weighted need level of the synchronization process 810. At that point, the synchronization process 810 may be granted access to the portable media device 820. When this happens, the weighted need level of the playback process 805 may begin to increase, and the weighted need level of the synchronization process 810 may begin to decrease. If hysteresis is used, switching of the access between the playback process 805 and the synchronization process 810 may occur at determined weighted need values depending, for example, on whether the weighted need value transmitted to the concurrency arbitrator 140 by process consumer is increasing or decreasing.

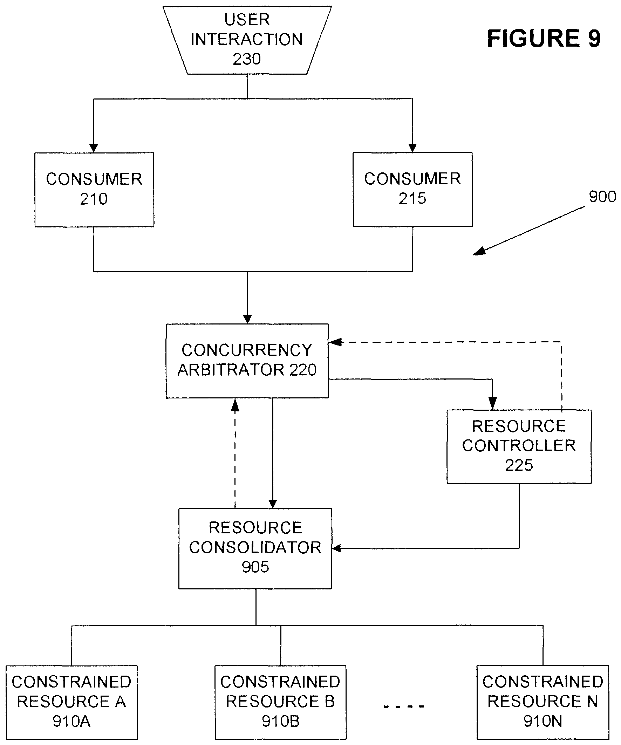

In some cases, the consumer's need levels may be reduced using alternative resources (e.g., a number of hard drives are available for storage), then one or more processors may execute code to implement the process shown in Figure 9. In Figure 9, the concurrency arbitrator 140 and resource controller 225 may communicate with a new resource consolidation layer 905. The resource consolidation layer 905 consolidates control of the various like resources available (910A, 910B and 910C). Thus, the concurrency arbitrator 140 and resource controller 225 do not need to be provided with data indicative of the fact that multiple like resources (910A, 910B and 910C) exist. Rather, the concurrency arbitrator 140 and resource controller 225 may operate and communicate to handle the multiple like resources (910A, 910B and 910C) without execution of code by the concurrency arbitrator 140 and resource controller 225 that is specific to the multiple like resources. Rather, such operations are delegated to the resource consolidation process 905. Additionally, or in the alternative, a similar result may be obtained by running a service such as MP (MultiLink PPP) on a network interface, where the service provides an aggregated link capacity over multiple links. The cost-constrained resource may be viewed as a single accessible interface created over the multiple network links.

The concurrency arbitrator 140 may grant access to the cost-constrained resource 205 concurrently to multiple resource consumers 210 and 215. Such concurrent access may be granted in situations where the cost-constrained resource 205 is capable of meeting the needs of the multiple resource consumers. Where the cost-constrained resource 205 is unable to meet all of the current needs of the resource consumers in the system, the concurrency arbitrator 140 may determine which of the multiple resource consumers are to have access to the cost-constrained resource based on the need criterion, such as the need values calculated by each of the resource consumers. Multiple resource consumers expressing the greatest need values may be concurrently given access to the cost-constrained resource provided the cost-constrained resource can meet such concurrent needs. In situations in which the operation of the cost-constrained resource can only provide for the needs of a single resource consumer, the concurrency arbitrator may grant such access based on the need values provided by all of the resource consumers concurrently requesting access to the cost-constrained resource.

This system and method may be applied to a broad range of processing systems. Such processing systems may include direct memory access controllers, video cards, and interface cards. To this end, a DMA controller may have a finite number of independently programmable DMA channels or engines. Since the number of channels is cost-constrained, it may be desirable to employ a concurrency arbitrator 140 to ensure that the highest priority resource consumers have the access to the DMA that they may need. A video card may have a finite number of layers, finite memory, or other finite parameters that may be managed using a concurrency arbitrator. Resource consumers may want to write a certain amount of data to a video card and find that their transmit buffers are filling up. In such a situation, the cost-constrained resource may serve as a data sink. As such, a concurrency arbitrator 140 may prioritize the need of a resource consumer to empty their buffers as they become full. Similar to the case of the video controllers, interface cards may have cost-constraints that work in either direction (e.g., measuring the need level of a process consumer based on the amount of data in the send buffers of the process consumer). For example, an interface controller, such as network interface controller 165, may only be a single resource consumer at a time, in which case access may be prioritized. Conversely, an interface controller may have a limited set of transmit buffers, so management of transmissions in the send direction may be desired.

The system present controls access to a cost-constrained resource by an arbitrary number of resource consumers of the resource, where the access is controlled using various behaviors of the cost-constrained resource and resource consumers. The system may also determine how the cost-constraint resource should provide its services. The system may provide control of access to the cost-constrained resources such that the most important system operations are given priority of access to the cost-constrained resources. The system may also dynamically adjust access to the cost-constrained resource. Still further, the manner in which the cost-constrained resource is used may be optimized based on the demands put upon it by the resource consumers.

The methods and descriptions set forth above may be encoded in a signal bearing medium, a computer readable medium or a computer readable storage medium such as a memory that may comprise unitary or separate logic, programmed within a device such as one or more integrated circuits, or processed by a controller or a computer. If the methods are performed by software, the software or logic may reside in a memory resident to or interfaced to one or more processors or controllers, a wireless communication interface, a wireless system, a powertrain controller, an entertainment and/or comfort controller of a vehicle or non-volatile or volatile memory remote from or resident to the system 100. The memory may retain an ordered listing of executable instructions for implementing logical functions. A logical function may be implemented through digital circuitry, through source code, through analog circuitry, or through an analog source such as through an analog electrical, or audio signals. The software may be embodied in any computer-readable medium or signal-bearing medium, for use by, or in connection with an instruction executable system or apparatus resident to a vehicle or a hands-free or wireless communication system. Alternatively, the software may be embodied in media players (including portable media players) and/or recorders. Such a system may include a computer-based system, a processor-containing system that includes an input and output interface that may communicate with an automotive or wireless communication bus through any hardwired or wireless automotive communication protocol, combinations, or other hardwired or wireless communication protocols to a local or remote destination, server, or cluster.

A computer-readable medium, machine-readable medium, propagated-signal medium, and/or signal-bearing medium may comprise any medium that contains, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical or tangible connection having one or more links, a portable magnetic or optical disk, a volatile memory such as a Random Access Memory "RAM" (electronic), a Read-Only Memory "ROM," an Erasable Programmable Read-Only Memory (EPROM or Flash memory), or an optical fiber. A machine-readable medium may also include a tangible medium upon which software is printed, as the software may be electronically stored as an image or in another format (e.g., through an optical scan), then compiled by a controller, and/or interpreted or otherwise processed. The processed medium may then be stored in a local or remote computer and/or a machine memory.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

**Claims**

1. A system comprising:

   a cost-constrained resource (145) comprising at least one layer or channel wherein the cost-constrained resource is a portable media device;
   a plurality of resource consumers (210,215) that request access to the cost-constrained resource, where each of the plurality of resource consumers provides a value corresponding to a degree of need by the resource consumer for access to the cost-constrained resource; and
   a concurrency arbitrator (140) adapted to:

   determine a need for access to the cost-constrained resource for each resource consumer requesting access to the cost-constrained resource, where the need for access to the cost-constrained resource corresponds to the value corresponding to a degree of need by the resource consumer for the cost-constrained resource provided by each of the plurality of resource consumers;
   grant access by a resource consumer to the cost-constrained resource by applying logical rules to:

   the determined need for access to the cost-constrained resource; and
   a cost of allowing one or more of the resource consumers access to the cost-constrained resource, wherein the cost is indicative of at least one operational characteristic of the resource consumer; and

   control a rate of data output from the cost-constrained resource to the plurality of resource consumers based on data throughput requirements of the plurality of resource consumers;

   where the values corresponding to a degree of need by the resource consumer for the cost-constrained resource of each resource consumer are normalized with respect to one another and are quantized to determine quantization values;
   wherein the concurrency arbitrator executes a hysteresis operation on a normalized value corresponding to a degree of need by the resource consumer for the cost-constrained resource received from a resource consumer to thereby reduce a frequency with which the concurrency arbitrator responds to changes in the value corresponding to a degree of need by the resource consumer for the cost-constrained resource provided by the resource consumer to the concurrency arbitrator.

2. The system of claim 1, where the concurrency arbitrator determines whether computational costs and/or data transfer costs associated with granting the resource consumer access to the cost-constrained resource exceed a threshold level and inhibits the resource consumer from accessing the cost-constrained resource when the threshold level is exceeded.

3. The system of claim 1, where the value corresponding to a degree of need by the resource consumer for the cost-constrained resource provided by each of the plurality of resource consumers is based on an amount of data in receive buffers of each of the plurality of resource consumers or an amount of data in transmission buffers of each of the plurality of resource consumers.

4. The system of claim 1, where the concurrency arbitrator facilitates control of a rate of data output through the at least one layer or channel of the cost-constrained resource to the plurality of resource consumers in response to throughput requirements of the plurality of resource consumers.

5. The system of claim 4, where the concurrency arbitrator comprises a smoothing filter so that the concurrency arbitrator responds to increases in the throughput requirements more quickly than decreases in the throughput requirements.

6. The system of claim 1, where at least one of the plurality of resource consumers comprises a virtual buffer.

7. The system of claim 1, wherein the concurrency arbitrator grants access to the cost-constrained resource to a given resource consumer of the plurality of resource consumers based on an amount of data stored in a buffer of the cost-constrained resource that is to be transferred to the given resource consumer.

8. The system of claim 1, where the value corresponding to a degree of need by the resource consumer for the cost-constrained resource of each resource is weighted, where the weighted value is used by the concurrency arbitrator to prioritize access to the cost constrained resource by the plurality of resource consumers.

9. The system of claim 1, wherein the value corresponding to a degree of need by the resource consumer for the cost-constrained resource for each resource consumer is weighted.

10. The system of claim 1, where the concurrency arbitrator grants access to the cost-constrained resource concurrently to more than one of the plurality of resource consumers.

11. The system of claim 1, where the concurrency arbitrator communicates with a controller of the access-constraint resource to control operating parameters of the cost-constrained resource.

12. A computer readable medium comprising instructions executable by one or more processors, which when executed, cause the one or more processors to execute the steps which the concurrency arbitrator of the system of any preceding claim is adapted to perform.

13. A method comprising the steps which the concurrency arbitrator (140) of the system of any of claims 1 to 11 is adapted to perform.

**Patentansprüche**

1. Ein System, das aufweist:

   eine kostenbeschränkte Ressource (145), die zumindest eine Schicht oder einen Kanal aufweist, wobei die kosten beschränkte Ressource eine tragbare Medienvorrichtung ist;
   eine Vielzahl von Ressourcenkonsumenten (210, 215), die Zugriff auf die kostenbeschränkte Ressource anfordern, wobei jeder der Vielzahl von Ressourcenkonsumenten einen Wert vorsieht, der einem Grad an Bedarf durch den Ressourcenkonsumenten hinsichtlich Zugriff auf die kostenbeschränkte Ressource entspricht; und
   einen Gleichzeitigkeitsarbitrator (140), der ausgebildet ist zum:

   Bestimmen eines Bedarfs hinsichtlich eines Zugriffs auf die kostenbeschränkte Ressource für jeden Ressourcenkonsumenten, der Zugriff auf die kostenbeschränkte Ressource anfordert, wobei der Bedarf hinsichtlich Zugriff auf die kostenbeschränkte Ressource dem Wert entspricht, der einem Grad an Bedarf durch den Ressourcenkonsumenten für die kostenbeschränkte Ressource entspricht, von jedem der Vielzahl von Ressourcenkonsumenten vorgesehen; Gewähren eines Zugriffs durch einen Ressourcenkonsumenten auf die kostenbeschränkte Ressource durch Anwenden logischer Regeln auf:

den bestimmten Bedarf hinsichtlich Zugriff auf die kostenbeschränkte Ressource; und
Kosten eines Ermöglichens, für einen oder mehrere der Ressourcenkonsumenten, eines Zugriffs auf die kostenbeschränkte Ressource, wobei die Kosten zumindest eine Betriebscharakteristik des Ressourcenkonsumenten angeben; und

Steuern einer Rate einer Datenausgabe von der kostenbeschränkten Ressource an die Vielzahl von Ressourcenkonsumenten basierend auf Datendurchsatzanforderungen der Vielzahl von Ressourcenkonsumenten; wobei die Werte, die einem Grad an Bedarf durch den Ressourcenkonsumenten hinsichtlich der kostenbeschränkten Ressource jedes Ressourcenkonsumenten entsprechen, in Bezug zueinander normalisiert werden und quantisiert werden, um Quantisierungswerte zu bestimmen;

wobei der Gleichzeitigkeitsarbitrator eine Hysterese-Operation auf einem normalisierten Wert, der einem Grad an Bedarf durch den Ressourcenkonsumenten hinsichtlich der kostenbeschränkten Ressource entspricht, der von einem Ressourcenkonsumenten empfangen wird, ausführt, um dadurch eine Häufigkeit zu reduzieren, mit der der Gleichzeitigkeitsarbitrator auf Änderungen des Werts reagiert, der einem Grad an Bedarf durch den Ressourcenkonsumenten hinsichtlich der kostenbeschränkten Ressource entspricht, durch den Ressourcenkonsumenten an den Gleichzeitigkeitsarbitrator vorgesehen.

2.  Das System gemäß Anspruch 1, wobei der Gleichzeitigkeitsarbitrator bestimmt, ob Rechenkosten und / oder Datenübertragungskosten, die mit einem Gewähren eines Zugriffs auf die kostenbeschränkte Ressource für den Ressourcenkonsumenten assoziiert sind, einen Schwellenwert übersteigen, und den Ressourcenkonsumenten daran hindert, auf die kostenbeschränkte Ressource zuzugreifen, wenn der Schwellenwert überschritten ist.

3.  Das System gemäß Anspruch 1, wobei der Wert, der einem Grad an Bedarf durch den Ressourcenkonsumenten hinsichtlich der kostenbeschränkten Ressource entspricht, von jedem der Vielzahl von Ressourcenkonsumenten vorgesehen, auf einer Menge von Daten in Empfangspuffern von jedem der Vielzahl von Ressourcenkonsumenten oder auf einer Menge von Daten in Übertragungspuffern von jedem der Vielzahl von Ressourcenkonsumenten basiert.

4.  Das System gemäß Anspruch 1, wobei der Gleichzeitigkeitsarbitrator eine Steuerung einer Rate einer Datenausgabe durch die zumindest eine Schicht oder den Kanal der kostenbeschränkten Ressource an die Vielzahl von Ressourcenkonsumenten in Reaktion auf Durchsatzanforderungen der Vielzahl von Ressourcenkonsumenten erleichtert.

5.  Das System gemäß Anspruch 4, wobei der Gleichzeitigkeitsarbitrator ein Glättungsfilter aufweist, so dass der Gleichzeitigkeitsarbitrator auf Erhöhungen der Durchsatzanforderungen schneller reagiert als auf Verringerungen der Durchsatzanforderungen.

6.  Das System gemäß Anspruch 1, wobei zumindest einer der Vielzahl von Ressourcenkonsumenten einen virtuellen Puffer aufweist.

7.  Das System gemäß Anspruch 1, wobei der Gleichzeitigkeitsarbitrator einen Zugriff auf die kostenbeschränkte Ressource für einen gegebenen Ressourcenkonsumenten der Vielzahl von Ressourcenkonsumenten basierend auf einer Menge von Daten gewährt, die in einem Puffer der kostenbeschränkten Ressource gespeichert ist, die an den gegebenen Ressourcenkonsumenten zu übertragen ist.

8.  Das System gemäß Anspruch 1, wobei der Wert, der einem Grad an Bedarf durch den Ressourcenkonsumenten hinsichtlich der kostenbeschränkten Ressource jeder Ressource entspricht, gewichtet wird, wobei der gewichtete Wert von dem Gleichzeitigkeitsarbitrator verwendet wird, um einen Zugriff auf die kostenbeschränkte Ressource durch die Vielzahl von Ressourcenkonsumenten zu priorisieren.

9.  Das System gemäß Anspruch 1, wobei der Wert, der einem Grad an Bedarf durch den Ressourcenkonsumenten hinsichtlich der kostenbeschränkten Ressource entspricht, für jeden Ressourcenkonsumenten gewichtet wird.

10. Das System gemäß Anspruch 1, wobei der Gleichzeitigkeitsarbitrator einen Zugriff auf die kostenbeschränkte Ressource gleichzeitig für mehr als einen der Vielzahl von Ressourcenkonsumenten gewährt.

11. Das System gemäß Anspruch 1, wobei der Gleichzeitigkeitsarbitrator mit einer Steuervorrichtung der zugriffsbeschränkten Ressource kommuniziert, um Betriebsparameter der kostenbeschränkten Ressource zu steuern.

**12.** Computerlesbares Medium mit Anweisungen, die von einem oder mehreren Prozessoren ausführbar sind, die bei Ausführung den einen oder die mehreren Prozessoren veranlassen, die Schritte auszuführen, die der Gleichzeitigkeitsarbitrator des Systems gemäß jedem vorangehenden Anspruch ausgebildet ist, durchzuführen.

**13.** Ein Verfahren, das die Schritte aufweist, die der Gleichzeitigkeitsarbitrator (140) des Systems gemäß einem der Ansprüche 1 bis 11 ausgebildet ist, durchzuführen.

**Revendications**

**1.** Système comprenant :

une ressource à contrainte de coût (145) comprenant au moins une couche ou un canal dans lequel la ressource à contrainte de coût est un dispositif multimédia portable ;
une pluralité de consommateurs de ressources (210, 215) qui demandent l'accès à la ressource à contrainte de coût, où chacun de la pluralité de consommateurs de ressources fournit une valeur correspondant à un degré de besoin par le consommateur de ressources de l'accès à la ressource à contrainte de coût ; et
un arbitre de simultanéité (140) adapté pour :

déterminer un besoin d'accès à la ressource à contrainte de coût pour chaque consommateur de ressources demandant l'accès à la ressource à contrainte de coût, où le besoin d'accès à la ressource à contrainte de coût correspond à la valeur correspondant à un degré de besoin par le consommateur de ressources de la ressource à contrainte de coût fournie par chacun de la pluralité de consommateurs de ressources ;
octroyer l'accès par un consommateur de ressources à la ressource à contrainte de coût en appliquant des règles logiques :

au besoin d'accès à la ressource à contrainte de coût déterminé ; et
à un coût d'autorisation de l'accès d'un ou plusieurs des consommateurs de ressources à la ressource à contrainte de coût, dans lequel le coût est indicatif d'au moins une caractéristique opérationnelle du consommateur de ressources ; et

contrôler un taux de sortie de données de la ressource à contrainte de coût vers la pluralité de consommateurs de ressources sur la base d'exigences de débit de données de la pluralité de consommateurs de ressources ;

où les valeurs correspondant à un degré de besoin par le consommateur de ressources de la ressource à contrainte de coût de chaque consommateur de ressources sont normalisées les unes par rapport aux autres et sont quantifiées pour déterminer des valeurs de quantification ; dans lequel l'arbitre de simultanéité exécute une opération d'hystérésis sur une valeur normalisée correspondant à un degré de besoin par le consommateur de ressources de la ressource à contrainte de coût reçue en provenance d'un consommateur de ressources pour réduire ainsi une fréquence avec laquelle l'arbitre de simultanéité répond à des changements de la valeur correspondant à un degré de besoin par le consommateur de ressources de la ressource à contrainte de coût fournie par le consommateur de ressources à l'arbitre de simultanéité.

**2.** Système selon la revendication 1, où l'arbitre de simultanéité détermine si des coûts computationnels et/ou des coûts de transfert de données associés à l'octroi au consommateur de ressources de l'accès à la ressource à contrainte de coût dépassent un niveau seuil et empêche le consommateur de ressources d'accéder à la ressource à contrainte de coût lorsque le niveau seuil est dépassé.

**3.** Système selon la revendication 1, où la valeur correspondant à un degré de besoin par le consommateur de ressources de la ressource à contrainte de coût fournie par chacun de la pluralité de consommateurs de ressources est basée sur une quantité de données dans des tampons de réception de chacun de la pluralité de consommateurs de ressources ou une quantité de données dans des tampons de transmission de chacun de la pluralité de consommateurs de ressources.

**4.** Système selon la revendication 1, où l'arbitre de simultanéité facilite le contrôle d'un taux de sortie de données par l'intermédiaire de l'au moins une couche ou un canal de la ressource à contrainte de coût vers la pluralité de consommateurs de ressources en réponse à des exigences de débit de la pluralité de consommateurs de ressources.

**5.** Système selon la revendication 4, où l'arbitre de simultanéité comprend un filtre de lissage de sorte que l'arbitre de simultanéité réponde à des augmentations des exigences de débit plus rapidement qu'à des diminutions des exigences de débit.

6. Système selon la revendication 1, où au moins l'un de la pluralité de consommateurs de ressources comprend un tampon virtuel.

7. Système selon la revendication 1, dans lequel l'arbitre de simultanéité octroie l'accès à la ressource à contrainte de coût à un consommateur de ressources donné de la pluralité de consommateurs de ressources sur la base d'une quantité de données stockées dans un tampon de la ressource à contrainte de coût qui doit être transférée au consommateur de ressources donné.

8. Système selon la revendication 1, où la valeur correspondant à un degré de besoin par le consommateur de ressources de la ressource à contrainte de coût de chaque ressource est pondérée, où la valeur pondérée est utilisée par l'arbitre de simultanéité pour prioriser l'accès à la ressource à contrainte de coût par la pluralité de consommateurs de ressources.

9. Système selon la revendication 1, dans lequel la valeur correspondant à un degré de besoin par le consommateur de ressources de la ressource à contrainte de coût pour chaque consommateur de ressources est pondérée.

10. Système selon la revendication 1, où l'arbitre de simultanéité octroie l'accès à la ressource à contrainte de coût simultanément à plus d'un de la pluralité de consommateurs de ressources.

11. Système selon la revendication 1, où l'arbitre de simultanéité communique avec un contrôleur de la ressource de contrainte d'accès pour contrôler des paramètres d'exploitation de la ressource à contrainte de coût.

12. Support lisible par ordinateur comprenant des instructions exécutables par un ou plusieurs processeurs qui, lorsqu'elles sont exécutées, amènent les un ou plusieurs processeurs à exécuter les étapes que l'arbitre de simultanéité du système selon une quelconque revendication précédente est adapté pour effectuer.

13. Procédé comprenant les étapes que l'arbitre de simultanéité (140) du système selon l'une quelconque des revendications 1 à 11 est adapté pour effectuer.

RAM 120

OPERATING
SYSTEM CODE
135

CONCURRENCY
ARBITRATOR
CODE
140

DRIVERS
170

BUFFERS
175

ROM 110

OPERATING
SYSTEM CODE
137

CONCURRENCY
ARBITRATOR
CODE
143

DRIVERS
173

100

USER
INTERFACE
130

PERSISTENT
STORAGE 115

PROCESSOR
105

I/O
125

COST-CONSTRAINED
RESOURCES 145

OPTICAL DRIVE
150

153

DMA
155

157

VIDEO CONTROLLER
160

163

NETWORK INTERFACE
CONTROLLER 165

167

FIGURE 1

**FIGURE 2**

VIRTUAL BUS
325

RESOURCE
DRIVER
330

CONCURRENCY
ARBITRATOR
305

RESOURCE
CONSUMER
315

RESOURCE
DRIVER
335

RESOURCE
CONSUMER
320

**FIGURE 3**

RESOURCE
CONTROLLER
310

CONSUMER
NEEDS
405

RESOURCE
COSTS
420

CONCURRENCY
RULES
410

RESOURCE
CONTROL AND
ACCESS
415

**FIGURE 4**

**FIGURE 5**

CONTROL REQUEST RECEIVED
FROM CONCURRENCY
ARBITRATOR
605

TRANSLATE REQUEST TO
MATCH API OF DEVICE
610

TRANSMIT TAILORED REQUEST
TO DEVICE DRIVER
615

OPTIONALLY, RECEIVE
CONFIRMATION OR FAILURE
FROM DEVICE DRIVER
620

OPTIONALLY, RETURN CONFIRMATION
OR FAILURE TO CONCURRENCY
ARBITRATOR
625

DONE

**FIGURE 6**

700

USER
INTERACTION
725

PLAYBACK
705

SYNCHRONIZATION
710

COPYING
715

CONCURRENCY
ARBITRATOR
140

CONTROLLER
225

**FIGURE 7**

CD DRIVE
720

800

USER
INTERACTION
825

PLAYBACK
805

SYNCHRONIZATION
810

FIGURE 8

CONCURRENCY
ARBITRATOR
140

PORTABLE
MEDIA PLAYER
CONTROLLER
825

PORTABLE
MEDIA PLAYER
820

**FIGURE 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NG.** *A distributed MPEG video player system with feedback and QoS control*